# EUROPEAN PATENT APPLICATION

(11) **EP 4 534 584 A1**
(43) Date of publication of application: **09.04.2025**
(21) Application number: 24203269.6
(22) Date of filing: 27.09.2024
(51) Int. Cl.: C08G 77/52

(54) **FLUORENE SKELETON-CONTAINING POLYMER**

(30) Priority: 04.10.2023 JP 2023172436
(71) Applicant: SHIN-ETSU CHEMICAL CO., LTD., Tokyo 1000005 (JP)
(72) Inventor: KAWAGUCHI, Yugo, Annaka-shi (JP); MARUYAMA, Hitoshi, Annaka-shi (JP); OMORI, Hiroto, Annaka-shi (JP)
(74) Representative: Ter Meer Steinmeister & Partner

(57) **Abstract**

A polymer having a silphenylene skeleton, a polysiloxane skeleton, and a fluorene skeleton in a main chain, and containing a polyhydric alcohol structure in a side chain.

## Description

### TECHNICAL FIELD

The present invention relates to a fluorene skeleton-containing polymer.

### BACKGROUND ART

Fluorene skeleton-containing polymers are known to be excellent in heat resistance and electrical characteristics. An example of the fluorene skeleton-containing polymers is a functional epoxy resin having formula (X) and disclosed in Patent Document 1. Since the epoxy resin does not have a flexible site in the main chain, the epoxy resin is expected to be cracked when being cured.

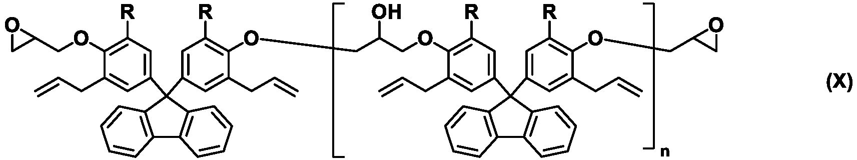

Meanwhile, fluorene skeleton-containing resins into which a divalent hydrocarbon group or a polysiloxane structure is introduced as a flexible site have been proposed (Patent Documents 2 and 3), and it is known that the fluorene skeleton-containing resins exhibit good flexibility. Furthermore, a fluorene skeleton-containing resin into which a polysiloxane structure and a silphenylene structure are introduced has also been proposed (Patent Document 4), and it has been found that the fluorene skeleton-containing resin is excellent not only in flexibility but also in film characteristics and chemical resistance.

In recent years, however, still higher heat resistance has been required of materials for semiconductor vehicles, and a new fluorene skeleton-containing resin has been desired.

### Citation List

| | |
|---|---|
| Patent Document 1: | JP 4873223 |
| Patent Document 2: | JP-A 2014-047207 |
| Patent Document 3: | JP-A 2014-062055 |
| Patent Document 4: | JP-A 2008-184571 |

### DISCLOSURE OF INVENTION

The present invention has been made in view of the above-mentioned circumstances, and an object of the present invention is to provide a new fluorene skeleton-containing polymer that provides a film more excellent in heat resistance than that obtained from a conventional fluorene skeleton-containing polymer containing a siloxane structure.

As a result of repeated studies to achieve the above-mentioned object, the present inventors have found that a polymer having a silphenylene skeleton, a polysiloxane skeleton, and a fluorene skeleton in a main chain, and containing a polyhydric alcohol structure in a side chain provides a film more excellent in heat resistance than that obtained from a conventional fluorene skeleton-containing polymer, and have completed the present invention.

That is, the present invention provides the following fluorene skeleton-containing polymer.
1. A polymer having a silphenylene skeleton, a polysiloxane skeleton, and a fluorene skeleton in a main chain, and containing a polyhydric alcohol structure in a side chain.
2. The polymer according to item 1, which contains a repeat unit having formula (A1) and a repeat unit having formula (A2), and may further contain a repeat unit having formula (A3) and a repeat unit having formula (A4): 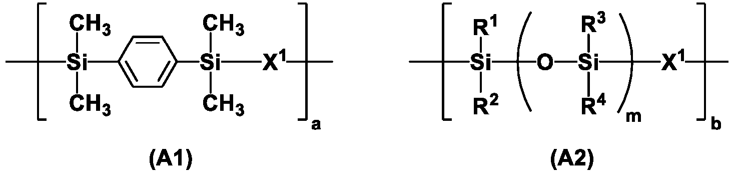 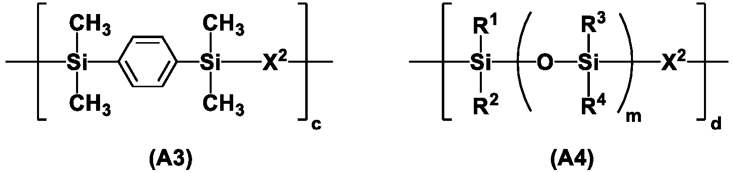 wherein R¹ to R⁴ are each independently a hydrocarbyl group that has 1 to 20 carbon atoms and may contain a heteroatom, m is each independently an integer of 1 to 600, and when m is an integer of 2 or more, R³s may be identical with or different from each other, and R⁴s may be identical with or different from each other, a, b, c, and d are numbers satisfying 0 < a < 1, 0 < b < 1, 0 ≤ c < 1, 0 ≤ d < 1, and a+b+c+d = 1, X¹ is a divalent group having formula (X1), and X² is a divalent group having formula (X2); 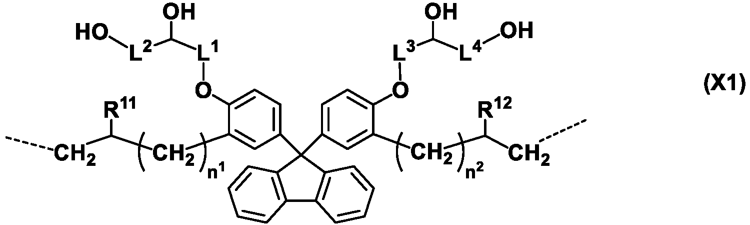 wherein n¹ and n² are each independently an integer of 1 to 7, R¹¹ and R¹² are each independently a hydrogen atom or a methyl group, L¹ to L⁴ are each independently a saturated hydrocarbylene group having 1 to 15 carbon atoms, a part of -CH₂- of the saturated hydrocarbylene groups may be substituted with -O-, -S-, -SO₂-, -CO-, or -CONH-, and a part or all of hydrogen atoms of the saturated hydrocarbylene groups may be substituted with a hydroxy group, and a broken line designates a bond; and 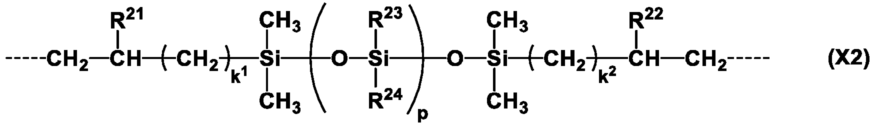 wherein R²¹ and R²² are each independently a hydrogen atom or a methyl group, R²³ and R²⁴ are each independently a hydrocarbyl group having 1 to 8 carbon atoms, k¹ and k² are each independently an integer of 0 to 7, p is an integer of 0 to 600, and a broken line designates a bond.
3. The polymer according to item 2, wherein both of L¹ and L³ have 1 carbon atom.
4. The polymer according to item 2 or 3, wherein both of L² and L⁴ have 1 carbon atom.
5. The polymer according to any one of items 2 to 4, wherein both of n¹ and n² are 1.
6. The polymer according to any one of items 2 to 5, wherein both of R¹¹ and R¹² are a hydrogen atom.
7. The polymer according to any one of items 2 to 6, wherein both of R²¹ and R²² are a hydrogen atom.

### ADVANTAGEOUS EFFECTS OF INVENTION

The polymer of the present invention can provide a film more excellent in heat resistance than that obtained from a conventional fluorene skeleton-containing polymer containing a siloxane structure.

### DESCRIPTION OF PREFERRED EMBODIMENTS

### Fluorene skeleton-containing polymer

The fluorene skeleton-containing polymer of the present invention is a polymer having a silphenylene skeleton, a polysiloxane skeleton, and a fluorene skeleton in a main chain, and containing a polyhydric alcohol structure in a side chain.

Such a polymer is preferably a polymer that contains a repeat unit having formula (A1) and a repeat unit having formula (A2), and may further contain a repeat unit having formula (A3) and a repeat unit having formula (A4).

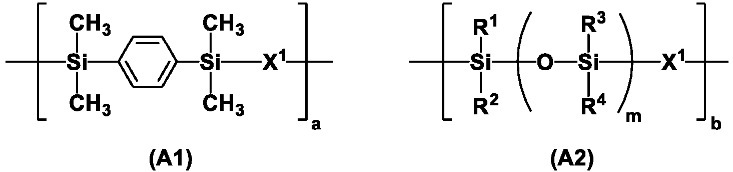

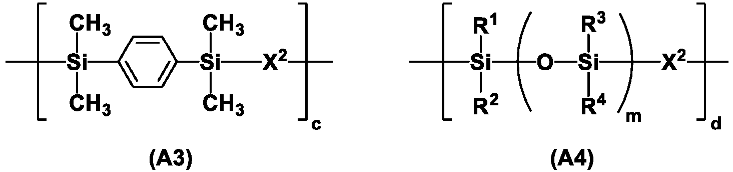

In formulae (A1) to (A4), a, b, c, and d are numbers satisfying 0 < a < 1, 0 < b < 1, 0 ≤ c < 1, 0 ≤ d < 1, and a+b+c+d = 1, and are preferably numbers satisfying 0.1 < a < 0.8, 0.1 < b < 0.8, 0 ≤ c < 0.15, 0 ≤ d < 0.15, and a+b+c+d = 1.

In formulae (A2) and (A4), R¹ to R⁴ are each independently a hydrocarbyl group that has 1 to 20 carbon atoms and may contain a heteroatom. m is each independently an integer of 1 to 600, and is preferably an integer of 8 to 100. When m is an integer of 2 or more, R³s may be identical with or different from each other, and R⁴s may be identical with or different from each other.

In each of formulae (A2) and (A4), when there are two or more siloxane units (that is, when m is an integer of 2 or more), all the siloxane units may be identical with each other, or the repeat unit of formula (A2) or (A4) may contain two or more types of different siloxane units. When the repeat unit of formula (A2) or (A4) contains two or more types of different siloxane units, the siloxane units may be randomly bonded or alternately bonded, or the repeat unit of formula (A2) or (A4) may contain a plurality of blocks of the same type of siloxane units.

In formulae (A1) and (A2), X¹ is a divalent group having formula (X1). The divalent group having formula (X1) is a group having a fluorene skeleton.

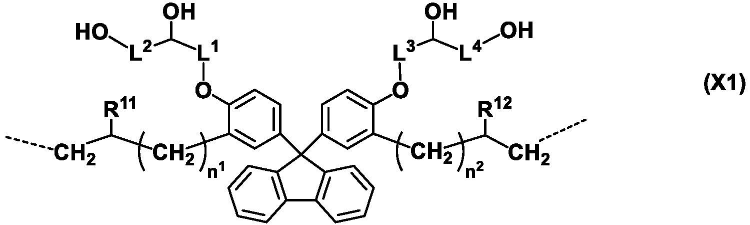

In the formula, a broken line designates a bond.

In formula (X1), n¹ and n² are each independently an integer of 1 to 7, and are each preferably 1.

In formula (X1), R¹¹ and R¹² are each independently a hydrogen atom or a methyl group, and both of R¹¹ and R¹² are preferably a hydrogen atom.

In formula (X1), L¹ to L⁴ are each independently a saturated hydrocarbylene group having 1 to 15 carbon atoms, a part of -CH₂- of the saturated hydrocarbylene groups may be substituted with -O-, -S-, -SO₂-, -CO-, or -CONH-, and a part or all of hydrogen atoms of the saturated hydrocarbylene groups may be substituted with a hydroxy group. The -CH₂- of the saturated hydrocarbylene group may be located at a terminal thereof.

The saturated hydrocarbylene group may be linear, branched, or cyclic, and specific examples thereof include alkanediyl groups having 1 to 15 carbon atoms, such as a methanediyl group, an ethane-1,1-diyl group, an ethane-1,2-diyl group, a propane-1,3-diyl group, a butane-1,4-diyl group, a pentane-1,5-diyl group, a hexane-1,6-diyl group, a heptane-1,7-diyl group, an octane-1,8-diyl group, a nonane-1,9-diyl group, a decane-1,10-diyl group, an undecane-1,11-diyl group, a dodecane-1,12-diyl group, a tridecane-1,13-diyl group, a tetradecane-1,14-diyl group, and a pentadecane-1,15-diyl group; and cyclic saturated hydrocarbylene groups having 3 to 15 carbon atoms, such as a cyclopentanediyl group, a cyclohexanediyl group, a norbornanediyl group, and an adamantanediyl group.

It is preferable that both of L¹ and L³ have 1 carbon atom, and it is more preferable that both of L² and L⁴ have 1 carbon atom.

In formulae (A3) and (A4), X² is a divalent group having formula (X2).

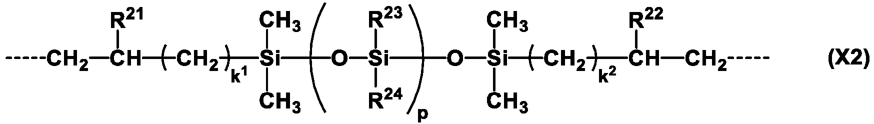

In the formula, a broken line designates a bond.

In formula (X2), R²¹ and R²² are each independently a hydrogen atom or a methyl group, and are each preferably a hydrogen atom.

In formula (X2), R²³ and R²⁴ are each independently a hydrocarbyl group having 1 to 8 carbon atoms.

In formula (X2), k¹ and k² are each independently an integer of 0 to 7, and are each preferably 0.

In formula (X2), p is an integer of 0 to 600, preferably an integer of 0 to 100, and more preferably an integer of 0 to 30. When p is an integer of 2 or more, R²³s may be identical with or different from each other, and R²⁴s may be identical with or different from each other.

The fluorene skeleton-containing polymer of the present invention preferably has a weight average molecular weight (Mw) of 2,000 to 500,000, and more preferably 8,000 to 100,000. A polymer having a Mw in the above-mentioned range can be obtained in the form of a solid, and the film formability can also be ensured. In the present invention, the Mw is a value measured in terms of polystyrene by gel permeation chromatography (GPC) using tetrahydrofuran (THF) as an elution solvent.

The fluorene skeleton-containing polymer of the present invention may be one in which the repeat unit having formula (A1), the repeat unit having formula (A2), the repeat unit having formula (A3), and the repeat unit having formula (A4) are randomly bonded or alternately bonded, or may contain a plurality of blocks of each unit.

### Method for producing fluorene skeleton-containing polymer

A method for producing the fluorene skeleton-containing polymer is not particularly limited, and for example, the fluorene skeleton-containing polymer can be produced by addition polymerization of a compound having formula (1), a compound having formula (2), a compound having formula (3), and if necessary, a compound having formula (4) in the presence of a metal catalyst.

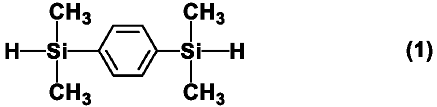

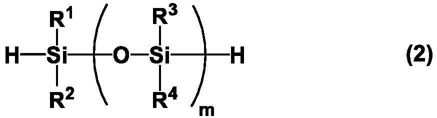

In the formula, R¹ to R⁴ and m are as defined above.

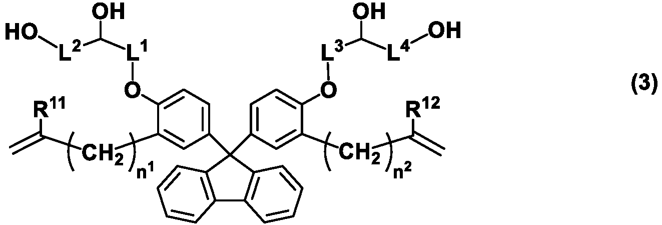

In the formula, R¹¹ and R¹², n¹, n², and L¹ to L⁴ are as defined above.

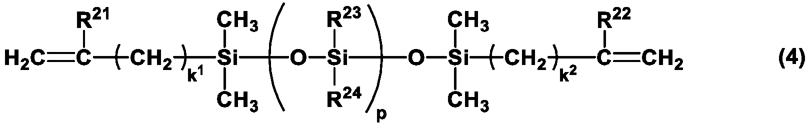

In the formula, R²¹ to R²⁴, k¹, k², and p are as defined above.

As for the metal catalyst, the following catalysts can be used: simple substances of platinum group metals, such as platinum (including platinum black), rhodium, and palladium; platinum chlorides, chloroplatinic acids, and chloroplatinates, such as H₂PtCl₄·xH₂O, H₂PtCl₆·xH₂O, NaHPtCl₆·xH₂O, KHPtCl₆·xH₂O, Na₂PtCl₆·xH₂O, K₂PtCl₄·xH₂O, PtCl₄·xH₂O, PtCl₂, and Na₂HPtCl₄·xH₂O (wherein x is preferably an integer of 0 to 6, and particularly preferably 0 or 6); alcohol-modified chloroplatinic acids (for example, those described in U.S. 3,220,972); complexes of a chloroplatinic acid with an olefin (for example, those described in U.S. 3,159,601, U.S. 3,159,662, and U.S. 3,775,452); platinum group metals such as platinum black and palladium supported on a carrier such as alumina, silica, or carbon; rhodium-olefin complexes; chlorotris(triphenylphosphine)rhodium (so-called Wilkinson's catalyst); and complexes of a platinum chloride, a chloroplatinic acid, or a chloroplatinate with a vinyl group-containing siloxane (in particular, a vinyl group-containing cyclosiloxane).

The amount of the catalyst used is a catalytic amount, and is usually preferably 0.001 to 0.1 wt% in terms of a platinum group metal with respect to the total amount of the reaction polymer. In the polymerization reaction, a solvent may be used if necessary. The solvent is, for example, preferably a hydrocarbon solvent such as toluene or xylene. As for the conditions of the polymerization, from the viewpoint of inhibiting the deactivation of the catalyst and completing the polymerization in a short time, the polymerization temperature is, for example, preferably 40 to 150°C, and particularly preferably 60 to 120°C. The polymerization time depends on the type and amount of the polymer, but is preferably about 0.5 to 100 hours, and particularly preferably 0.5 to 30 hours in order to inhibit interference of moisture in the polymerization system. After completion of the polymerization reaction, the solvent, when being used, is distilled off to give the polymer.

The reaction method is not particularly limited, but it is preferable to first mix and heat the compound having formula (2), the compound having formula (3), and if necessary, the compound having formula (4), then add the metal catalyst to the resulting mixed solution, and then add the compound having formula (1) dropwise to the mixed solution over 0.1 to 5 hours.

These raw material compounds are preferably blended so that the total amount of hydrosilyl groups in the compound having formula (1) and the compound having formula (2) is 0.67 to 1.67, and more preferably 0.83 to 1.25 in terms of molar ratio with respect to the total amount of alkenyl groups in the compound having formula (3) and the compound having formula (4). The Mw of the polymer of the present invention can be controlled by using a monoallyl compound such as o-allylphenol, or a monohydrosilane or a monohydrosiloxane such as triethylhydrosilane as a molecular weight modifier.

In the polymerization reaction, a polymerization inhibitor may be optionally used. Examples of the polymerization inhibitor used include various phenols, hydroquinones, benzoquinones, catechols, hydroxylamines, and nitroso compounds. The amount of the polymerization inhibitor used is not particularly limited, but is preferably 0.001 to 10 wt%, and more preferably 0.01 to 5 wt% with respect to the compound having formula (3).

After completion of the reaction, a solvent is optionally added, and water washing is performed. Then, the solvent is distilled off by heating the organic layer under reduced pressure to give the fluorene skeleton-containing polymer of the present invention. At the time of water washing, an aqueous solution of a metal hydroxide such as sodium hydroxide or potassium hydroxide, or a metal carbonate or a metal hydrogen carbonate such as sodium carbonate, sodium hydrogen carbonate, or potassium carbonate may be optionally used.

Another example of the method for producing the fluorene skeleton-containing polymer of the present invention is a reaction between a polymer that contains a repeat unit having formula (B 1) and a repeat unit having formula (B2), and may further contain a repeat unit having formula (B3) and a repeat unit having formula (B4) (hereinafter, the polymer is also referred to as a polymer B) and a compound having formula (5).

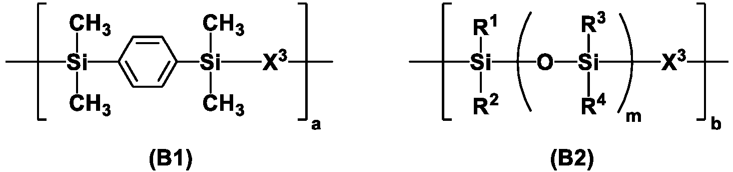

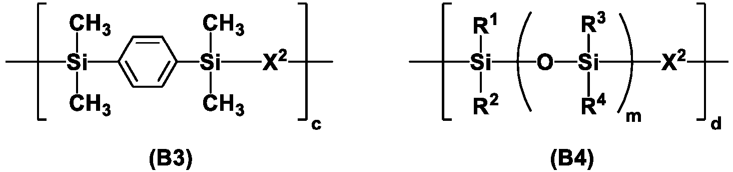

In the formulae, R¹ to R⁴, m, a, b, c, d, and X² are as defined above.

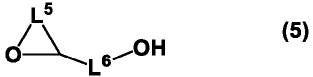

In formulae (B1) and (B2), X³ is a divalent group having formula (X3). The divalent group having formula (X3) is a group having a fluorene skeleton.

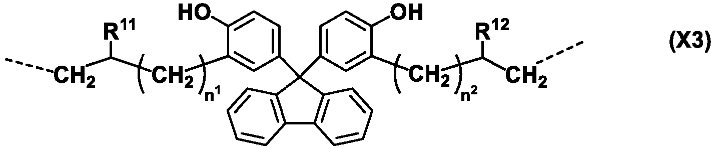

In the formula, R¹¹, R¹², n¹, and n² are as defined above. A broken line designates a bond.

In formula (5), L⁵ is a saturated hydrocarbylene group having 1 to 14 carbon atoms, a part of -CH₂- of the saturated hydrocarbylene group may be substituted with -O-, -S-, -SO₂-, -CO-, or -CONH-, and a part or all of hydrogen atoms of the saturated hydrocarbylene group may be substituted with a hydroxy group. The saturated hydrocarbylene group represented by L⁵ may be linear, branched, or cyclic, and preferably has 1 to 7 carbon atoms.

In formula (5), L⁶ is a saturated hydrocarbylene group having 1 to 14 carbon atoms, a part of -CH₂- of the saturated hydrocarbylene group may be substituted with -O-, -S-, -SO₂-, -CO-, or -CONH-, and a part or all of hydrogen atoms of the saturated hydrocarbylene group may be substituted with a hydroxy group. The saturated hydrocarbylene group represented by L⁶ may be linear, branched, or cyclic, and preferably has 1 to 7 carbon atoms.

Specific examples of the compound having formula (5) include glycidol (Epiol OH^{®} manufactured by NOF CORPORATION), but are not limited thereto.

The reaction conditions are not particularly limited, but it is usually preferable to mix and heat the polymer B and the compound having formula (5) in a solvent. From the viewpoint of accelerating the reaction, a polar solvent is preferably used as the solvent, and an alcohol-based solvent such as propylene glycol monomethyl ether is particularly preferably used. From the viewpoint of inhibiting side reactions and completing the reaction in a short time, the reaction temperature is, for example, preferably 35 to 130°C, and particularly preferably 45 to 100°C. The reaction time depends on the type and amount of the reaction substrate, but is preferably about 0.5 to 50 hours, and particularly preferably 0.5 to 24 hours.

In the above-mentioned reaction, the raw material compounds are blended such that the molar ratio of the compound having formula (5) to X³ in the polymer B is preferably 1.0 to 8.0, and more preferably 4.0 to 6.0. The compound having formula (5) may be used singly or in combination of two or more types thereof.

In the above-mentioned reaction, a catalyst may be optionally used. Examples of the catalyst include amines such as triethylamine, triethylenediamine, bis-(2-dimethylaminoethyl) ether, and N-methylmorpholine; phosphines such as triphenylphosphine and tri(o-tolyl)phosphine; quaternary ammonium salts such as tetrabutylammonium chloride, benzyltriethylammonium chloride, and tetraethyl hydroxyl ammonium; imidazole compounds such as imidazole and 2-ethyl-4-methylimidazole; pyridine compounds such as pyridine, N,N-dimethyl-4-aminopyridine, and 2,6-lutidine; organotin compounds such as tin acetate, tin octylate, tin oleate, tin laurate, dibutyltin diacetate, dimethyltin dilaurate, dibutyltin dilaurate, dibutyltin dimercaptide, dibutyltin maleate, dibutyltin dilaurate (dibutyltin(IV) dilaurate), dibutyltin dineodecanoate, dioctyltin dimercaptide, dioctyltin dilaurylate, and dibutyltin dichloride; organolead compounds such as lead octanoate and lead naphthenate; organonickel compounds such as nickel naphthenate; organocobalt compounds such as cobalt naphthenate; organocopper compounds such as copper octenate; organobismuth compounds such as bismuth octylate and bismuth neodecanoate; and potassium salts such as potassium carbonate, potassium acetate, and potassium octylate.

The amount of the catalyst used is usually a catalytic amount, and is preferably 0.1 to 20 mol% with respect to X³ in the polymer B. The catalyst may be used singly or in combination of two or more types thereof.

In the above-mentioned reaction, a polymerization inhibitor may be optionally used. Examples of the polymerization inhibitor used include various phenols, hydroquinones, benzoquinones, catechols, hydroxylamines, and nitroso compounds. The amount of the polymerization inhibitor used is not particularly limited, but is preferably 0.001 to 10 wt%, and more preferably 0.01 to 5 wt% with respect to the compound having formula (5).

After completion of the reaction, a solvent is optionally added, and water washing is performed. Then, the solvent is distilled off by heating the organic layer under reduced pressure to give the fluorene skeleton-containing polymer of the present invention. At the time of water washing, an aqueous solution of a metal hydroxide such as sodium hydroxide or potassium hydroxide, or a metal carbonate or a metal hydrogen carbonate such as sodium carbonate, sodium hydrogen carbonate, or potassium carbonate may be optionally used.

When the polymer of the present invention is formed into a composition containing the polymer and a curing agent, and the composition is applied to a substrate and then heated, a cured film having excellent heat resistance can be obtained.

The curing agent used can be an isocyanate curing agent. Examples of the isocyanate curing agent include aliphatic isocyanates such as methyl isocyanate, tetramethylene diisocyanate, and hexamethylene diisocyanate, alicyclic isocyanates such as isophorone diisocyanate, aromatic isocyanates such as toluene diisocyanate, diphenylmethane diisocyanate, and meta-phenylene diisocyanate, and modified products of the above-mentioned compounds.

The content of the curing agent in the composition is preferably 5 to 50 parts by weight, and more preferably 5 to 45 parts by weight per 100 parts by weight of the polymer of the present invention. The curing agent may be used singly or in combination of two or more types thereof.

The composition may contain a solvent if necessary. Examples of the solvent include ketones such as cyclohexanone, cyclopentanone, and methyl-2-n-pentyl ketone; alcohols such as 3-methoxybutanol, 3-methyl-3-methoxybutanol, 1-methoxy-2-propanol, and 1-ethoxy-2-propanol; ethers such as propylene glycol monomethyl ether, ethylene glycol monomethyl ether, propylene glycol monoethyl ether, ethylene glycol monoethyl ether, propylene glycol dimethyl ether, and diethylene glycol dimethyl ether; and esters such as propylene glycol monomethyl ether acetate, propylene glycol monoethyl ether acetate, ethyl lactate, ethyl pyruvate, butyl acetate, methyl 3-methoxypropionate, ethyl 3-ethoxypropionate, tert-butyl acetate, tert-butyl propionate, propylene glycol mono-tert-butyl ether acetate, and γ-butyrolactone. These may be used singly or as a mixture of two or more types thereof. The content of the solvent in the composition is preferably 50 to 2,000 parts by weight, more preferably 50 to 1,000 parts by weight, and still more preferably 50 to 100 parts by weight per 100 parts by weight of the polymer of the present invention. The solvent may be used singly or as a mixture of two or more types thereof.

The composition can be applied to the substrate by a known method. For example, methods such as a dip method, a spin coating method, and a roll coating method can be used. The application amount can be appropriately selected according to the purpose, but is preferably an amount at which the film has a thickness of 0.1 to 100 µm.

Heating and curing of the applied composition can provide a film excellent in heat resistance. The heating condition is appropriately selected according to the type of the fluorene skeleton-containing polymer and the curing agent used, but it is usually preferable to perform heating at 50 to 250°C for about 10 minutes to 6 hours.

### EXAMPLES

Hereinafter, the present invention is specifically described with reference to Examples and Comparative Examples, but the present invention is not limited to the following Examples. In the following Examples, the Mw was measured by GPC with monodisperse polystyrene as a standard under the analysis conditions of a flow rate of 0.6 mL/min, THF as an elution solvent, and a column temperature of 40°C using TSKGEL Super HZM-H (manufactured by Tosoh Corporation) as a GPC column.

Compounds used for the synthesis of polymers are shown below.

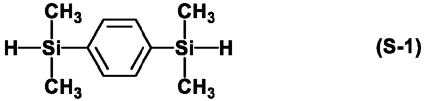

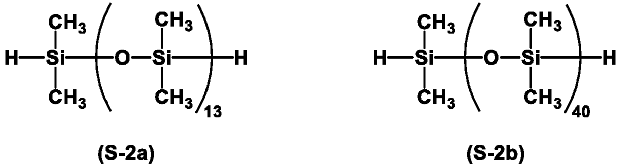

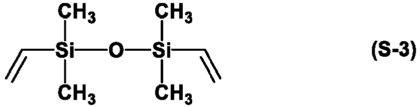

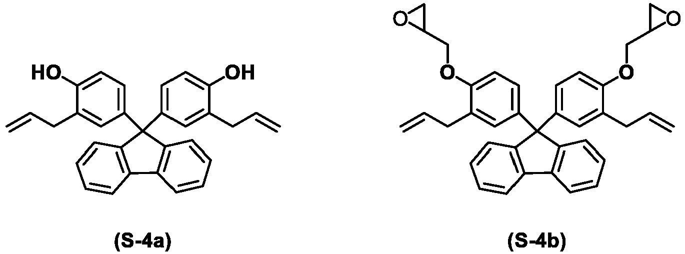

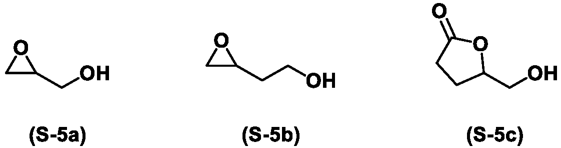

### Example 1

### Synthesis of Polymer 1

To a 10 L flask equipped with a stirrer, a thermometer, a nitrogen replacement device, and a reflux condenser were added 245.4 g (0.235 mol) of a compound having formula (S-2a) and 430.5 g (1.00 mol) of a compound having formula (S-4a), then 1,500 g of toluene was added to the flask, and the resulting mixture was heated to 70°C. Then, 1.0 g of a toluene solution of a chloroplatinic acid (platinum concentration: 0.5 wt%) was charged to the flask, and 142.9 g (0.735 mol) of a compound having formula (S-1) was added dropwise thereto over 1 hour (total of hydrosilyl groups : total of alkenyl groups = 0.97 : 1 (molar ratio)). After completion of the dropwise addition, the resulting mixture was heated to 90°C and aged for 11 hours, and then toluene was distilled off from the reaction solution under reduced pressure to give a polymer. To the polymer, 2,000 g of propylene glycol monomethyl ether was added, and after the dissolution of propylene glycol monomethyl ether was confirmed, 444.5 g (6.00 mol) of a compound having formula (S-5a) and 10.1 g (0.10 mol) of triethylamine were added thereto, and the resulting mixture was heated at 80°C for 12 hours. After completion of the reaction, propylene glycol monomethyl ether and triethylamine were distilled off from the reaction solution under reduced pressure to give Polymer 1. Polymer 1 had a Mw of 8,000. The Mw was measured in terms of polystyrene by gel permeation chromatography (GPC) using tetrahydrofuran as an elution solvent.

Polymer 1 was confirmed to be a polymer containing the repeat unit having formula (A1) and the repeat unit having formula (A2) by ¹H-NMR (manufactured by Bruker Corporation).

### Example 2

### Synthesis of Polymer 2

To a 10 L flask equipped with a stirrer, a thermometer, a nitrogen replacement device, and a reflux condenser were added 530.5 g (0.18 mol) of a compound having formula (S-2b), 387.5 g (0.90 mol) of the compound having formula (S-4a), and 18.64 g (0.10 mol) of a compound having formula (S-3), then 1,500 g of toluene was added to the flask, and the resulting mixture was heated to 70°C. Then, 1.0 g of a toluene solution of a chloroplatinic acid (platinum concentration: 0.5 wt%) was charged to the flask, and 153.6 g (0.79 mol) of the compound having formula (S-1) was added dropwise thereto over 1 hour (total of hydrosilyl groups : total of alkenyl groups = 0.97 : 1 (molar ratio)). After completion of the dropwise addition, the resulting mixture was heated to 90°C and aged for 11 hours, and then toluene was distilled off from the reaction solution under reduced pressure to give a polymer. To the polymer, 2,000 g of propylene glycol monomethyl ether was added, and after the dissolution of propylene glycol monomethyl ether was confirmed, 400.0 g (5.40 mol) of the compound having formula (S-5a) and 9.11 g (0.09 mol) of triethylamine were added thereto, and the resulting mixture was heated at 80°C for 12 hours. After completion of the reaction, propylene glycol monomethyl ether and triethylamine were distilled off from the reaction solution under reduced pressure to give Polymer 2. Polymer 2 had a Mw of 80,000. Polymer 2 was confirmed to be a polymer containing the repeat unit having formula (A1), the repeat unit having formula (A2), the repeat unit having formula (A3), and the repeat unit having formula (A4) by ¹H-NMR (manufactured by Bruker Corporation).

### Example 3

### Synthesis of Polymer 3

To a 10 L flask equipped with a stirrer, a thermometer, a nitrogen replacement device, and a reflux condenser were added 245.4 g (0.235 mol) of the compound having formula (S-2a) and 430.5 g (1.00 mol) of the compound having formula (S-4a), then 1,500 g of toluene was added to the flask, and the resulting mixture was heated to 70°C. Then, 1.0 g of a toluene solution of a chloroplatinic acid (platinum concentration: 0.5 wt%) was charged to the flask, and 142.9 g (0.735 mol) of the compound having formula (S-1) was added dropwise thereto over 1 hour (total of hydrosilyl groups : total of alkenyl groups = 0.97 : 1 (molar ratio)). After completion of the dropwise addition, the resulting mixture was heated to 90°C and aged for 11 hours, and then toluene was distilled off from the reaction solution under reduced pressure to give a polymer. To the polymer, 2,000 g of propylene glycol monomethyl ether was added, and after the dissolution of propylene glycol monomethyl ether was confirmed, 528.6 g (6.00 mol) of a compound having formula (S-5b) and 10.1 g (0.10 mol) of triethylamine were added thereto, and the resulting mixture was heated at 80°C for 12 hours. After completion of the reaction, propylene glycol monomethyl ether and triethylamine were distilled off from the reaction solution under reduced pressure to give Polymer 3. Polymer 3 had a Mw of 8,500. Polymer 3 was confirmed to be a polymer containing the repeat unit having formula (A1) and the repeat unit having formula (A2) by ¹H-NMR (manufactured by Bruker Corporation).

### Example 4

### Synthesis of Polymer 4

To a 10 L flask equipped with a stirrer, a thermometer, a nitrogen replacement device, and a reflux condenser were added 245.4 g (0.235 mol) of the compound having formula (S-2a) and 430.5 g (1.00 mol) of the compound having formula (S-4a), then 1,500 g of toluene was added to the flask, and the resulting mixture was heated to 70°C. Then, 1.0 g of a toluene solution of a chloroplatinic acid (platinum concentration: 0.5 wt%) was charged to the flask, and 142.9 g (0.735 mol) of the compound having formula (S-1) was added dropwise thereto over 1 hour (total of hydrosilyl groups : total of alkenyl groups = 0.97 : 1 (molar ratio)). After completion of the dropwise addition, the resulting mixture was heated to 90°C and aged for 11 hours, and then toluene was distilled off from the reaction solution under reduced pressure to give a polymer. To the polymer, 2,000 g of propylene glycol monomethyl ether was added, and after the dissolution of propylene glycol monomethyl ether was confirmed, 696.7 g (6.00 mol) of a compound having formula (S-5c) and 10.1 g (0.10 mol) of triethylamine were added thereto, and the resulting mixture was heated at 80°C for 12 hours. After completion of the reaction, propylene glycol monomethyl ether and triethylamine were distilled off from the reaction solution under reduced pressure to give Polymer 4. Polymer 4 had a Mw of 9,000. Polymer 4 was confirmed to be a polymer containing the repeat unit having formula (A1) and the repeat unit having formula (A2) by ¹H-NMR (manufactured by Bruker Corporation).

### Comparative Example 1

### Synthesis of Comparative Polymer 1

To a 10 L flask equipped with a stirrer, a thermometer, a nitrogen replacement device, and a reflux condenser were added 401 g (0.50 mol) of the compound having formula (S-2a), 488 g (0.90 mol) of a compound having formula (S-4b), and 18.6 g (0.10 mol) of the compound having formula (S-3), then 1,100 g of toluene was added to the flask, and the resulting mixture was heated to 80°C. Then, 1.0 g of a toluene solution of a chloroplatinic acid (platinum concentration: 0.5 wt%) was charged to the flask, and 95.3 g (0.49 mol) of the compound having formula (S-1) was added dropwise thereto over 1 hour (total of hydrosilyl groups : total of alkenyl groups = 0.99 : 1 (molar ratio)). After completion of the dropwise addition, the resulting mixture was heated to 100°C and aged for 6 hours, and then toluene was distilled off from the reaction solution under reduced pressure to give Comparative Polymer 1. Comparative Polymer 1 had a Mw of 12,000.

### Comparative Example 2

### Synthesis of Comparative Polymer 2

To a 10 L flask equipped with a stirrer, a thermometer, a nitrogen replacement device, and a reflux condenser were added 362 g (0.45 mol) of the compound having formula (S-2b), 215 g (0.50 mol) of the compound having formula (S-4a), and 271 g (0.50 mol) of the compound having formula (S-4b), then 2,100 g of toluene was added to the flask, and the resulting mixture was heated to 70°C. Then, 2.0 g of a toluene solution of a chloroplatinic acid (platinum concentration: 0.5 wt%) was charged to the flask, and 105 g (0.54 mol) of the compound having formula (S-1) was added dropwise thereto over 1 hour (total of hydrosilyl groups : total of alkenyl groups = 0.99 : 1 (molar ratio)). After completion of the dropwise addition, the resulting mixture was heated to 100°C and aged for 12 hours, and then toluene was distilled off from the reaction solution under reduced pressure to give Comparative Polymer 2. Comparative Polymer 2 had a Mw of 14,000.

### Heat resistance test

To 100 parts by weight of each of Polymers 1 to 4 and Comparative Polymers 1 and 2, 20 parts by weight of DURANATE TMA-100 (manufactured by Asahi Kasei Corporation) as an isocyanate curing agent was added and 55 parts by weight of cyclopentanone was further added, and the components were dissolved until the resulting solution became uniform. Each of the solutions was applied to a silicon wafer by spin coating, prebaked at 120°C for 2 minutes, and then thermally cured at 180°C for 4 hours to form a film (thickness: 20 µm) on the silicon wafer. The sample was heated at 150°C for 300 hours, and the weight loss rate then was measured to evaluate heat resistance. The heat resistance was determined as "good" when the weight loss rate was less than 1%, and was determined as "poor" when the weight loss rate was 1% or more. The results are shown in Table 1.

**Table 1**

| | | Example | | | | Comparative Example | |
|---|---|---|---|---|---|---|---|
| | | 1 | 2 | 3 | 4 | 1 | 2 |
| Polymer | 1 | 100 | - | - | - | - | - |
| | 2 | - | 100 | - | - | - | - |
| | 3 | - | - | 100 | - | - | - |
| | 4 | - | - | - | 100 | - | - |
| Comparative Polymer | 1 | - | - | - | - | 100 | - |
| | 2 | - | - | - | - | - | 100 |
| DURANATE TMA-100 | | 20 | 20 | 20 | 20 | 20 | 20 |
| Cyclopentanone | | 55 | 55 | 55 | 55 | 55 | 55 |
| Heat resistance | | good | good | good | good | poor | poor |

From the above-mentioned results, the films obtained from the polymers of the present invention were excellent in heat resistance.

## Claims

1. A polymer having a silphenylene skeleton, a polysiloxane skeleton, and a fluorene skeleton in a main chain, and containing a polyhydric alcohol structure in a side chain.

2. The polymer according to claim 1, which comprises a repeat unit having formula (A1) and a repeat unit having formula (A2), and may further comprise a repeat unit having formula (A3) and a repeat unit having formula (A4): 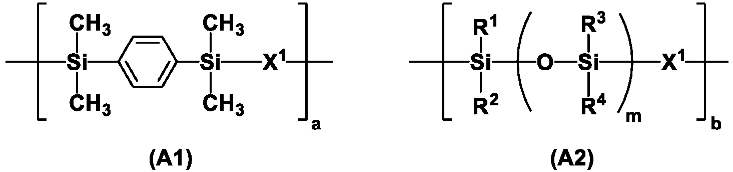 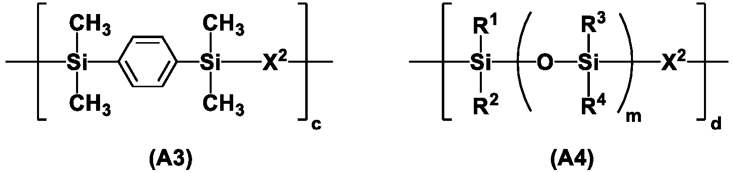
wherein R¹ to R⁴ are each independently a hydrocarbyl group that has 1 to 20 carbon atoms and may contain a heteroatom, m is each independently an integer of 1 to 600, and when m is an integer of 2 or more, R³s may be identical with or different from each other, and R⁴s may be identical with or different from each other, a, b, c, and d are numbers satisfying 0 < a < 1, 0 < b < 1, 0 ≤ c < 1, 0 ≤ d < 1, and a+b+c+d = 1, X¹ is a divalent group having formula (X1), and X² is a divalent group having formula (X2); 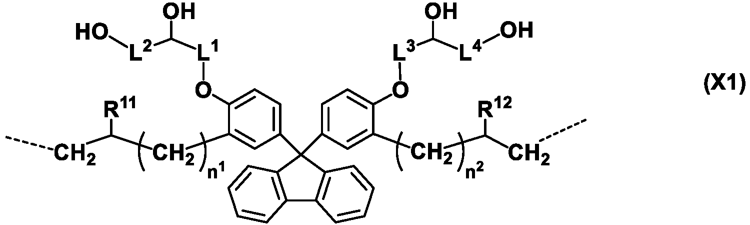
wherein n¹ and n² are each independently an integer of 1 to 7, R¹¹ and R¹² are each independently a hydrogen atom or a methyl group, L¹ to L⁴ are each independently a saturated hydrocarbylene group having 1 to 15 carbon atoms, a part of -CH₂- of the saturated hydrocarbylene groups may be substituted with -O-, -S-, -SO₂-, -CO-, or -CONH-, and a part or all of hydrogen atoms of the saturated hydrocarbylene groups may be substituted with a hydroxy group, and a broken line designates a bond; and 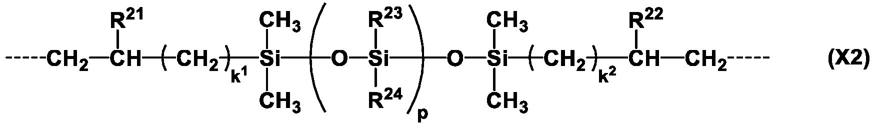
wherein R²¹ and R²² are each independently a hydrogen atom or a methyl group, R²³ and R²⁴ are each independently a hydrocarbyl group having 1 to 8 carbon atoms, k¹ and k² are each independently an integer of 0 to 7, p is an integer of 0 to 600, and a broken line designates a bond.

3. The polymer according to claim 2, wherein both of L¹ and L³ have 1 carbon atom.

4. The polymer according to claim 2 or 3, wherein both of L² and L⁴ have 1 carbon atom.

5. The polymer according to claim 2 or 3, wherein both of n¹ and n² are 1.

6. The polymer according to claim 2 or 3, wherein both of R¹¹ and R¹² are a hydrogen atom.

7. The polymer according to claim 2 or 3, wherein both of R²¹ and R²² are a hydrogen atom.
